# EUROPÄISCHE PATENTSCHRIFT

(11) **EP 3 041 875 B1**
(45) Veröffentlichungstag und Bekanntmachung des Hinweises auf die Patenterteilung: **06.11.2019**
(21) Anmeldenummer: 14761309.5
(22) Anmeldetag: 02.09.2014
(51) Int. Cl.: C08G 12/32, C08L 61/20, C08L 61/28, C08G 12/02

(54) **FORMALDEHYDFREIE AMINO- ODER AMIDHARZE BASIEREND AUF EINER REAKTIVEN SCHUTZGRUPPE UND EINEM DI- ODER TRIALDEHYD ALS NETZWERKBILDNER**
FORMALDEHYDE-FREE AMINO OR AMIDE RESINS BASED ON A REACTIVE PROTECTIVE GROUP AND A DI- OR TRIALDEHYDE AS A CROSSLINKING AGENT
RÉSINE AMINO OU AMIDE SANS FORMALDÉHYDE À BASE D'UN GROUPE PROTECTEUR RÉACTIF ET D'UN DIALDÉHYDE OU TRIALDÉHYDE COMME AGENT DE RÉTICULATION

(30) Priorität: 04.09.2013 DE 102013217654
(43) Veröffentlichungstag der Anmeldung: 13.07.2016
(73) Patentinhaber: Fraunhofer Gesellschaft zur Förderung der angewandten Forschung E.V., 80686 München (DE)
(72) Erfinder: BÖRNER, Frank, 13503 Berlin (DE); JOBMANN, Monika, 21614 Buxtehude (DE); HAHN, Mathias, 14552 Michendorf (DE)
(74) Vertreter: Maiwald Patent- und Rechtsanwaltsgesellschaft mbH
(86) Internationale Anmeldenummer: PCT/EP2014/068568
(87) Internationale Veröffentlichungsnummer: WO 2015/032733

(56) Entgegenhaltungen:
- CN-A- 102 304 337
- JP-A- H07 126 596
- US-A- 4 888 412
- US-A1- 2004 198 908
- US-A1- 2006 185 094
- US-A1- 2010 247 941
- WANG S ET AL: "Succinaldehyde induced water resistance improvements of UF wood adhesives", HOLZ ALS ROHUND WERKSTOFF ; EUROPEAN JOURNAL OF WOOD AND WOOD PRODUCTS, SPRINGER, BERLIN, DE, Bd. 55, Nr. 1, 1. Februar 1997 (1997-02-01), Seiten 9-12, XP019675542, ISSN: 1436-736X
- DESPRES A ET AL: "Formaldehyde-free Aminoresin Wood Adhesives Based on Dimethoxyethanal", JOURNAL OF APPLIED POLYMER SCIENCE, WILEY, US, Bd. 110, Nr. 6, 15. Dezember 2008 (2008-12-15), Seiten 3908-3916, XP002628171, ISSN: 0021-8995, DOI: 10.1002/APP.28936 [gefunden am 2008-09-19]

## Beschreibung

Aminoharze und Amidharze sind relativ niedermolekulare, aushärtbare Materialien, die durch Umsetzung von Carbonylverbindungen (insbesondere Aldehyden wie Formaldehyd) mit Verbindungen, die NH-Gruppen aufweisen, gewonnen werden. Nach einer anschließenden Vernetzung (d.h. Aushärtung) des Amino- oder Amidharzes erhält man einen Duroplasten.

Als Komponenten mit Amin- oder Amidfunktionalität werden z. B. Harnstoff, Melamin, Benzoguanamin, Dicyandiamid und Acetylendiharnstoff eingesetzt, wobei insbesondere Harnstoff- und Melaminharze von technischer Bedeutung sind. Als Aldehydkomponente kommt aufgrund seiner hohen Reaktivität und des niedrigen Rohstoffpreises vorzugsweise Formaldehyd zum Einsatz. Bei der Harzsynthese wird häufig mit einem Überschuss an Aldeyd gearbeitet, um die Reaktionen zwischen beiden Komponenten zu unterstützen. Entsprechend hoch sind die Restgehalte an Formaldehyd. Formaldehyd kann ebenfalls durch Hydrolyse der Polykondensate freigesetzt werden.

Nachteilig ist die von Formaldehyd ausgehende gesundheitliche Belastung. Formaldehyd ist zurzeit gemäß der europäischen Verordnung über die Einstufung, Kennzeichnung und Verpackung von Stoffen und Gemischen als Gefahrstoff mit krebserzeugenden Eigenschaften der Kategorie 2 eingestuft. Geplant ist eine Einstufung in die Kategorie 1B.

Aufgrund dieses Gefährdungspotenzials bemüht man sich seit vielen Jahren um eine Reduzierung des Formaldehydgehaltes. Hierfür wurden verschiedene Lösungsansätze gefunden und auch technisch umgesetzt. Hierzu zählen:
- Der Einsatz von Formaldehydfängern, die den freien Formaldehyd binden, wie z. B. Amine (Harnstoff, Melamin), Polyamine (Polyvinylamin, Polyethylenamin) oder Polyphenole (Tannin). Nachteilig sind hierbei allerdings z.B. eine verlangsamte Reaktionsgeschwindigkeit des Harzes und die negative Beeinflussung der mechanischen Eigenschaften (WO 2006/127818, WO 2006/134083, WO2008/068180).
- Die Reduzierung des Anteils an Formaldehyd bei der Harzsynthese (z.B. Molverhältnis 1: < 1 bei Einsatz von Harnstoff und Formaldehyd). Dies führt jedoch zu einer Verringerung der Harzreaktivität und letztlich auch zu einer Verschlechterung der mechanischen Eigenschaften und der Stabilität in Wasser (DE60125602).

Basierend auf diesen Maßnahmen ist es gelungen, den Formaldehydgehalt deutlich zu reduzieren. So konnte die Formaldehydemission aus Spanplatten, bei deren Herstellung Harnstoff-Formaldehyd-Harz als Bindemittel eingesetzt wurde, von ca. 100 ppm vor 1970 auf ca. 5 ppm im Jahr 2008 reduziert werden (EP2265684). Für Platten der Klasse E1 liegt Grenzwert zurzeit bei 0,1 ppm.

Aufgrund der aktuellen Diskussion zur Reklassifizierung von Formaldehyd ist jedoch zukünftig eine weitere Reduzierung der zulässigen Grenzwerte bzw. eine generelle Einschränkung der Einsatzgebiete von Produkten, in deren Herstellungskette Formaldehyd eingesetzt wird, zu erwarten.

Somit rücken Harzsysteme, die vollständig ohne Formaldehyd auskommen, wieder in den Vordergrund, auch wenn aus ökonomischer Sicht Formaldehyd der preiswerteste Aldehyd ist.

Der Ersatz von Formaldehyd durch andere Monoaldehyde ist bekannt.

Aminoharze auf der Basis reiner Glyoxylsäure liefern ebenfalls stabile Harze, bringen jedoch eine große Salzlast mit, da sie, um nicht auszuhärten, vor der Synthese zu den Aminoharzen mit einer Base neutralisiert werden müssen. Diese Salze nehmen leicht Wasser auf und führen bei der Anwendung (z.B. in Holzwerkstoffen) zu einer erhöhten Quellbarkeit der Endprodukte. Da die Säuregruppe mit Calciumionen wasserunlösliche Salze bildet, werden solche Systeme aber als Betonverfestiger und Fließhilfsmittel in der Bauindustrie eingesetzt (z.B. US 2008/108732, DE 2004050395, US 5750634, US 5891983).

In US2010/0247941 und US2006/0093843 werden Aminoharze auf der Basis von Dimethoxyglyoxal (auch als Dimethoxyethanal bezeichnet) beschrieben. Diese Harze sollen als Leime bei der Herstellung von Holzwerkstoffen eingesetzt werden. Diese Harze sind allerdings relativ unreaktiv, was z.B. bei der Holzwerkstoffherstellung zu langen Presszeiten führt.

Harze auf Basis von Dimethoxyglyoxal und Melamin werden auch für den Einsatz bei der Mikroverkapselung von Duftstoffen beschrieben (WO2013/068255, WO2009/100553, WO2011/161618).

Dialdehyde wie z.B. Glyoxal liefern schon bei der leicht basischen Anlagerung an Harnstoff, Melamin, Benzoguanamin, Acetylendiharnstofff bzw. Dicyandiamid unlösliche vernetzte Gelstrukturen. Aufgrund dieser Selbstvernetzung schon bei der Anlagerung und der daraus resultierenden hohen Viskositäten haben derartige Harze keine technische Relevanz.

In DE 3041580 wird bei der Harzsynthese ein alkylierter Harnstoff eingesetzt, so dass die möglichen Umsetzungen am Amid reduziert werden. Die Amidgruppen werden durch Alkylgruppen geschützt, bevor Glyoxal angelagert wird. Diese Harze werden in hochverdünnten Lösungen als Knitterfestausführung in der Textilindustrie eingesetzt.

US 2004/0198908 A1 beschreibt ein Verfahren zur Herstellung einer vernetzbaren Zusammensetzung, in dem ein Melamin und/oder Guanamin, ein Mono(Alkylaldehyd), ein Poly(Alkylaldehyd) und ein Alkohol miteinander umgesetzt werden.

US 2006/0185094 A1 beschreibt ein Kondensationsprodukt, das saure Gruppen enthält und auf einem C₂₋₁₂-Monoaldehyd und einer Aminverbindung basiert.

US 4,888,412 beschreibt ein Kondensationsprodukt von Melamin, Glyoxylsäure und Glyoxal.

CN 102304337 A beschreibt eine Klebstoffzusammensetzung, die ein Tripolycyanamid, ein Dialdehyd und ein Monoaldehyd enthält.

JP 7-126596 beschreibt einen Holzklebstoff, der Formaldehyd, Glyoxal und ein Aminoharz enthält.

S. Wang et al., Holz als Roh- und Werkstoff, European Journal of Wood and Wood Products, Band 55, 1997, S. 9-12, beschreiben eine Zusammensetzung, die durch Zugabe von Succinaldehyd zu einem Harnstoff-Formaldehyd-Harz (UF-Harz) erhalten wird.

US 2010/0247941 A1 beschreibt ein Aminoharz, das durch Umsetzung eines Amins mit Glyoxalmonoacetal und Glyoxylsäure erhalten wird.

A. Despres et al., Journal of Applied Polymer Science, Band 110, 2008, S. 3908-3916, beschreiben die Herstellung eines Aminoharzes durch Umsetzung von Melamin, Dimethoxyethanal und Glyoxylsäure.

Wie beschrieben, stehen prinzipiell weitere Aldehyde als Alternativen zum Formaldehyd bei der Harzsynthese zur Verfügung. Dabei ist jedoch zu berücksichtigen, dass die bekannten Systeme entweder nicht reaktiv genug sind, oder bei Einsatz dieser Harze nicht das für die Endprodukte gewünschte Eigenschaftsprofil erhalten werden kann (Festigkeit, Steifigkeit bzw. Beständigkeit). Bei der Verwendung von Dialdehyden wie Glyoxal stellt sich wiederum das Problem, dass sich bereits bei der Anlagerung des Dialdehyds an das Amin oder Amid vernetzte Strukturen bilden.

Der Erfindung liegt die Aufgabe zugrunde, Formaldehyd-freie Aminoharze und Amidharze bereit zu stellen, die einerseits lagerstabil sind, sich andererseits aber unter Einstellung entsprechender Aushärtungsbedingungen gut dreidimensional vernetzen lassen und dabei Endprodukte liefern, die hinsichtlich Festigkeit, Steifigkeit oder Beständigkeit das gewünschte Eigenschaftsprofil aufweisen. Eine weitere Aufgabe der vorliegenden Erfindung liegt in der Bereitstellung eines Verfahrens zur Herstellung eines Formaldehyd-freien Aminoharzes, das den oben genannten Anforderungen gerecht wird.

Gemäß eines ersten Aspekts der vorliegenden Erfindung wird das Problem gelöst durch ein Verfahren zur Herstellung eines Formaldehyd-freien Aminoharzes oder Amidharzes, umfassend
(i) die Umsetzung eines Triamins oder Triamids mit einem Monoaldehyd, der mindestens 2 C-Atome aufweist, wobei
   - der Monoaldehyd eine Aldehydcarbonsäure oder ein Salz der Aldehydcarbonsäure, ein Alkoxyaldehyd oder ein Gemisch davon ist und
   - das molare Verhältnis des Monoaldehyds zu den Amingruppen des Triamins oder den Amidgruppen des Triamids im Bereich von 0,5/3 bis 2,2/3 liegt,
   unter Ausbildung eines Zwischenprodukt, das an mindestens einer Amingruppe oder Amidgruppe eine reaktive Schutzgruppe aufweist, die sich aus dem Monoaldehyd ableitet, und
(ii) die Umsetzung des Zwischenprodukts mit einem Dialdehyd oder Trialdehyd unter Ausbildung eines vernetzbaren Aminoharzes oder Amidharzes, wobei das molare Verhältnis des in Schritt (ii) zugegebenen Dialdehyds oder Trialdehyds zu den Amingruppen des in Schritt (i) zugegebenen Triamins oder den Amidgruppen des in Schritt (i) zugegebenen Triamids im Bereich von 0,1/3 bis 2,2/3 liegt.

Im Rahmen der vorliegenden Erfindung wurde festgestellt, dass sich lagerstabile Aminoharze oder Amidharze auch mit Dialdehyden oder Trialdehyden herstellen lassen, wenn das Ausgangsamin bzw. Ausgangsamid (wie z.B. Melamin) zunächst mit einem geeigneten Monoaldehyd umgesetzt wird. In bekannter Weise reagiert dabei die Aldehydgruppe mit dem Stickstoff der Amin- bzw. Amidgruppe. Der als Folge dieser Reaktion an das Stickstoffatom der Amin- oder Amidgruppe kovalent gebundene und sich aus dem Monoaldehyd ableitende Rest fungiert dann als Schutzgruppe, die in dem Verfahrensschritt (ii) verhindert, dass es bei der Umsetzung mit dem Dialdehyd oder Trialdehyd zu einer unerwünschten signifikanten Vernetzung kommt.

Da bei der Anlagerung eines Aldehyds an ein Amin oder Amid gemäß der Reaktionsgleichung

-NHR + OHC- → -NR-CH(OH)-

die Aldehydgruppe in eine Hydroxylgruppe überführt wird und diese Hydroxylgruppe eine reaktive Gruppe darstellt, die für eine spätere Vernetzungsreaktion genutzt werden kann, handelt es sich bei der Schutzgruppe um eine reaktive Schutzgruppe.

Nach dem Schritt (i) sind also zunächst ein oder mehrere Amingruppen des Ausgangsamins bzw. Amidgruppen des Ausgangsamids durch eine sich aus dem Monoaldehyd ableitende reaktive Schutzgruppe blockiert. Wird nun in Schritt (ii) der Dialdehyd oder Trialdehyd zugegeben, kann dieser zunächst nur mit N-Atomen reagieren, die in Schritt (i) noch nicht mit einer Schutzgruppe blockiert wurden. Da die Reaktion des Monoaldehyds mit dem Ausgangsamin bzw. Ausgangsamid in Schritt (i) eine Gleichgewichtsreaktion ist, kann der Dialdehyd oder Trialdehyd in Schritt (ii) außerdem die sich aus dem Monoaldehyd ableitenden Schutzgruppen teilweise ersetzen.

Mit dem erfindungsgemäßen Verfahren werden Oligomere mit sehr kurzen Sequenzen gebildet. Diese Aminoharze bzw. Amidharze können auch noch bei hohen Feststoffanteilen (z.B. 60 Gew%) problemlos stabilisiert werden.

In einer bevorzugten Ausführungsform weist das vernetzbare Aminoharz oder Amidharz freie Aldehydgruupen auf. Die Anwesenheit freier Aldehydgruppen kann die Reaktivität bei der Einstellung geeigneter Bedingungen erhöhen und somit die Herstellung eines vernetzten Endprodukts unterstützen.

Durch die in Schritt (ii) noch mögliche Umsetzung des Dialdehyds oder Trialdehyds mit dem Stickstoff des Amins bzw. Amids können zwar einerseits gemäß der Reaktionsgleichung

-NHR + OHC-R-CHO → -NR-CH(OH)-R-CHO

freie Aldehydgruppen entstehen, eine signifikante vorzeitige (und daher unerwünschte) Vernetzung findet jedoch nicht statt.

Die Reaktivität des vernetzbaren Amino- bzw. Amidharzes wird auch durch die Anwesenheit der reaktiven Schutzgruppe erhöht. Wie bereits oben erläutert, enthält der sich aus dem Monoaldehyd ableitende und als Schutzgruppe für die Amin- oder Amidgruppe fungierende Rest eine reaktive OH-Gruppe, die bei Einstellung entsprechender Bedingungen für eine spätere Vernetzungsreaktion zur Verfügung steht.

Das Ausgangsamin oder Ausgangsamid enthält 3 Amin- bzw. Amidgruppen (d.h. Triamin bzw. Triamid).

Als Ausgangsamin oder Ausgangsamid kommt beispielsweise ein Aminotriazin, Iminoharnstoff (d.h. Guanidin), ein Iminoharnstoffderivat oder ein Gemisch dieser Verbindungen in Frage.

Geeignete Aminotriazine sind insbesondere Amino-1,3,5-triazine wie z.B. Melamin, Acetoguanamin und Benzoguanamin. Als geeignete Iminoharnstoffderivate können beispielsweise cyclische Iminoharnstoffe genannt werden.

Der Monoaldehyd weist eine Carbonsäuregruppe oder ein Salz davon (d.h. eine Carboxylatgruppe) oder eine Ethergruppe auf.

Der Monoaldehyd ist eine Aldehydcarbonsäure oder ein Salz der Aldehydcarbonsäure oder ein Alkoxyaldehyd (z.B. ein Dialkoxyaldehyd, ein Monoalkoxyaldehyd) oder ein Gemisch davon.

Als Salz der Aldehydcarbonsäure kann beispielsweise ein Salz der Glyoxylsäure (z.B. Glyoxylsäurenatrium oder Glyoxylsäurekalium) oder ein Salz des Malonsäuremonoaldehyds verwendet werden.

Sofern ein Salz der Aldehydcarbonsäure verwendet wird, kann es sich beispielsweise um ein Alkalimetall-, Erdalkalimetall- oder Ammoniumsalz handeln.

Bei dem Alkoxyaldehyd kann es sich beispielsweise um einen Monoalkoxyaldehyd oder einen Dialkoxyaldehyd handeln. Der Alkoxyrest kann beispielsweise ein C₁₋₄-Alkoxyrest sein. Als geeigneter Dialkoxyaldehyd kann z.B. Dimethoxyethanal genannt werden.

Bevorzugt wird in dem erfindungsgemäßen Verfahren kein Formaldehyd zugegeben.

Bevorzugt erfolgt in dem erfindungsgemäßen Verfahren keine Alkylierung von Amingruppen des Amins oder Amidgruppen des Amids.

Das molare Verhältnis des Monoaldehyds zu den Amingruppen des Triamins oder den Amidgruppen des Triamids liegt im Bereich von 0,5/3 bis 2,2/3, bevorzugter 1,8/3 bis 2,2/3.

In dem erfindungsgemäßen Verfahren ist es prinzipiell möglich, dass in Schritt (i) jede Amingruppe des Ausgangsamins bzw. jede Amidgruppe des Ausgangsamids mit zumindest einem Monoaldehyd reagiert, so dass an jeder Amin- bzw. Amidgruppe zumindest eine reaktive Schutzgruppe vorliegt. Die Anlagerung des Dialdehyds oder Trialdehyds in Schritt (ii) erfolgt dann ausschließlich über den partiellen Austausch gegen reaktive Schutzgruppen.

Alternativ kann es jedoch bevorzugt sein, dass in Schritt (i) zumindest eine Amingruppe des Amins oder eine Amidgruppe des Amids nicht mit dem Monoaldehyd unter Ausbildung einer reaktiven Schutzgruppe umgesetzt wird. Diese nicht durch eine reaktive Schutzgruppe blockierte Amin- bzw. Amidgruppe wäre dann in Schritt (ii) unmittelbar für eine Reaktion mit dem Dialdehyd oder Trialdehyd zugänglich. Geeignete Verfahrensbedingungen, um dies sicherzustellen, sind dem Fachmann bekannt. Beispielsweise kann der Monoaldehyd im molaren Unterschuss, bezogen auf die Anzahl der Amingruppen des Amins bzw. der Amidgruppen des Amids, zugegeben werden.

Für Schritt (i) geeignete Lösungsmittel sind dem Fachmann grundsätzlich bekannt. Bevorzugt wird ein wässriges Lösungsmittel verwendet. Ferner können wasserstoffbrückenbrechende polare Lösungsmittel eingesetzt werden.

Geeignete Reaktionsbedingungen (wie z.B. Reaktionstemperatur und pH-Wert) für die Umsetzung des Amins mit dem Monoaldehyd sind dem Fachmann grundsätzlich bekannt.

Die Reaktionstemperatur kann beispielsweise im Bereich von 20°C bis 100°C, bevorzugter im Bereich von 40 bis 65°C liegen.

In Abhängigkeit von dem Amin bzw. Amid und dem verwendeten Monoaldehyd kann der pH-Wert über einen breiten Bereich variieren. Der pH-Wert kann beispielsweise im Bereich von 6 bis 10, bevorzugter 7 bis 8,5 liegen.

Sofern das Amin oder das Amid nicht oder nur geringfügig wasserlöslich ist, kann es bevorzugt sein, einen hydratisierten Monoaldehyd einzusetzen.

Bei den nicht oder nur geringfügig wasserlöslichen Aminen oder Amiden handelt es sich beispielsweise um Aminotriazine (wie z.B. Melamin oder Benzoguanamin).

Beispiele für geeignete wasserlösliche Monoaldehyde sind z.B. ein Salz einer Aldehydcarbonsäure (beispielsweise ein Salz der Glyoxylsäure oder des Malonsäuremonoaldehyds), ein Alkoxyaldehyd (beispielsweise ein Dialkoxyaldehyd wie Dimethoxyethanal oder ein Monoalkoxyaldehyd) oder Gemische davon.

Die wasserlöslichen Aldehyde fungieren als "Schlepper" des Amins oder Amids in die wässrige Phase, d.h. durch die Reaktion des nicht oder nur geringfügig wasserlöslichen Amins oder Amids mit dem wasserlöslichen Monoaldehyd entsteht ein Amin oder Amid als Zwischenprodukt, das gegenüber dem Ausgangsamin oder - amid eine deutlich erhöhte Wasserlöslichkeit aufweist. Wie bereits oben erläutert, wird durch die Anlagerung des Monoaldehyds an eine oder mehrere Amin- oder Amidgruppen eine reaktive Schutzgruppe generiert, die einerseits verhindert, dass die nachfolgende Umsetzung mit einem Dialdehyd oder Trialdehyd zu einer unerwünschten vorzeitigen Vernetzung des Materials führt, andererseits aber eine reaktive Gruppe (in Form einer Hydroxylgruppe) enthält, die bei Einstellung geeigneter Vernetzungsbedingungen (insbesondere saurer pH-Bereich oder Salze bei erhöhten Temperaturen) die Vernetzungsreaktion unterstützen kann.

Da es sich bei der Umsetzung des Monoaldehyds mit dem Amin oder Amid um eine Gleichgewichtsreaktion handelt, können bei der anschließend erfolgenden Zugabe des Dialdehyds oder Trialdehyds in Schritt (ii) die sich aus dem Monoaldehyd ableitenden reaktiven Schutzgruppen teilweise durch den Dialdehyd oder Trialdehyd ersetzt werden. Der dadurch in Schritt (ii) teilweise freigesetzte Monoaldehyd ist dann wieder für eine Reaktion mit dem Ausgangsamin bzw. Ausgangsamid verfügbar.

An den ungelösten Bestandteilen des Ausgangsamins oder Ausgangsamids kann sich nur ein Monoaldehyd anlagern. Es können sich keine unlöslichen Passivierungsschichten auf der Feststoffoberfläche der Amine oder Amide ausbilden. Das führt dazu, dass man für wasserunlösliche Amine oder Amide (wie z.B. Melamin, Benzoguanamin) ähnliche Auflösungsgeschwindigkeiten wie bei der Herstellung der entsprechenden Formaldehydharze erzielen kann. Die Monoaldehyde erhöhen die Löslichkeit der Amine bzw. Amide und fungieren als Schleppmittel in die kontinuierliche Phase.

Handelt es sich bei dem Ausgangsamin oder Ausgangsamid um eine wasserlösliche Verbindung (beispielsweise Guanidin), kann es ebenfalls bevorzugt sein, die oben beschriebenen Monoaldehyde mit guter Wasserlöslichkeit (eine Aldehydcarbonsäure oder ein Salz davon oder ein Alkoxyaldehyd wie Dimethoxyethanal) zu verwenden. Wie oben ausgeführt, erfolgt in Schritt (ii) des erfindungsgemäßen Verfahrens die Umsetzung des mit einer oder mehreren reaktiven Schutzgruppen versehenen Zwischenprodukts mit einem Dialdehyd oder Trialdehyd unter Ausbildung eines vernetzbaren Aminoharzes oder Amidharzes.

Bevorzugt weist das vernetzbare Aminoharz oder Amidharz freie Aldehydgruppen auf.

Mit Aminen oder Amiden umsetzbare Dialdehyde oder Trialdehyde sind dem Fachmann an sich bekannt.

Beispielhaft können in diesem Zusammenhang Glyoxal oder ein Dialdehyd der Formel OHC-(CH₂)₁₋₃-CHO (d.h. Malonaldehyd, Succindialdehyd, Glutaraldehyd) genannt werden.

Als geeigneter Trialdehyd kann beispielsweise 2,4,6-Tris(p-formylphenoxy)-1,3,5-triazin genannt werden.

Im Rahmen der vorliegenden Erfindung ist es möglich, dass der Dialdehyd oder Trialdehyd dem Zwischenprodukt aus Schritt (i), welches bevorzugt in einer wässrigen Lösung vorliegt, zudosiert wird. Alternativ ist es auch möglich, dass das Zwischenprodukt aus Schritt (i) (z.B. in Form einer wässrigen Lösung) dem Dialdehyd oder Trialdehyd zudosiert wird. In beiden Fällen ist es bevorzugt, dass die eine Komponente der anderen Komponente kontinuierlich zudosiert wird. Während im ersten Fall ausreichend langsam zudosiert wird, so dass sich im Reaktionsmedium während der Umsetzung immer nur eine geringe Konzentration an nicht umgesetztem Dialdehyd oder Trialdehyd befinden, wird im Fall gut wasserlöslicher Produkte zügig zudosiert, um nach der Reaktion das Harz durch Abkühlung zu stabilisieren.

Bevorzugt wird das Zwischenprodukt aus Schritt (i) nicht isoliert, sondern in Form der wässrigen Lösung, in der es in Schritt (i) hergestellt wurde, für die Umsetzung mit dem Dialdehyd oder Trialdehyd in Schritt (ii) verwendet.

Das molare Verhältnis des in Schritt (ii) zugegenenen Dialdehyds oder Trialdehyds zu den Amingruppen des in Schritt (i) zugegenenen Triamins oder den Amidgruppen des in Schritt (i) zugegebenen Triamids liegt im Bereich von 0,1/3 bis 2,2/3, bevorzugter 0,8/3 bis 2,2/3.

Das molare Verhältnis des in Schritt (ii) zugegebenen Dialdehyds oder Trialdehyds zu dem in Schritt (i) zugegebenen Monoaldehyd kann beispielsweise im Bereich von 1/0,01 bis 1/5 oder 1,5/0,2 bis 1,5/2 oder auch 2/0,3 bis 2/1 liegen.

Geeignete Reaktionsbedingungen (wie z.B. Reaktionstemperatur und pH-Wert) für die Umsetzung eines Amins oder Amids mit dem Dialdehyd sind dem Fachmann grundsätzlich bekannt.

Die Reaktionstemperatur in Schritt (ii) kann beispielsweise im Bereich von 20°C bis 100°C, bevorzugter von 40°C bis 65°C liegen. Der pH-Wert kann beispielsweise im Bereich von 6 bis 10, bevorzugter 7 bis 8,5 liegen.

Wie bereits oben erläutert, können mit dem erfindungsgemäßen Verfahren Oligomere mit sehr kurzen Sequenzen gebildet werden und die Aminoharze bzw. Amidharze können auch noch bei hohen Feststoffanteilen (z.B. 60 Gew%) problemlos stabilisiert werden. Auch bei den gut löslichen Verbindungen wie Guanidin bleiben die Reaktionsprodukte durch die sich aus dem Monoaldehyd ableitende reaktive Schutzgruppe so niedrig viskos, dass eine Stabilisierung auch bei hohen Feststoffanteilen sehr gut möglich ist.

Weiterhin zeichnet sich das Aminharz bzw. Amidharz in einer bevorzugten Ausführungsform dadurch aus, dass es freie Aldehydgruppen aufweist, die die Reaktivität bei der Einstellung geeigneter Bedingungen erhöhen und somit die Herstellung eines vernetzten Endprodukts unterstützen.

Die Reaktivität des vernetzbaren Amino- bzw. Amidharzes wird auch durch die Anwesenheit der reaktiven Schutzgruppe erhöht.

Damit wird eine Reaktivität erreicht, die derjenigen von Harzen auf Formaldehydbasis entspricht oder diese sogar übertrifft.

Nach Schritt (ii) können die hergestellten Aminoharze oder Amidharze stabilisiert werden, beispielsweise durch
- Abkühlen (z.B. auf eine Temperatur unterhalb von 30°C, bevorzugter unterhalb von 25°C) und/oder
- Zusatz von Alkoholen und/oder
- Einstellen des pH auf einen Wert im Bereich von 7,0-9,0, bevorzugter 7,5-8,5.

Gemäß einem weiteren Aspekt betrifft die vorliegende Erfindung ein Verfahren zur Herstellung eines Duroplasten, umfassend
- die Bereitstellung eines Formaldehyd-freien, vernetzbaren Aminoharzes oder Amidharzes gemäß des oben beschriebenen Verfahrens und
- die Vernetzung bzw. Aushärtung des Aminoharzes oder Amidharzes.

Geeignete Bedingungen für die Vernetzung eines Amino- oder Amidharzes zur Herstellung eines duroplastischen Materials sind dem Fachmann grundsätzlich bekannt.

Gemäß eines weiteren Aspekts betrifft die vorliegende Erfindung ein Formaldehyd-freies, vernetzbares Aminoharz oder Amidharz, das durch das oben beschriebene Verfahren erhältlich ist.

Bevorzugt weist das vernetzbare Aminoharz oder Amidharz freie Aldehydgruppen auf.

In dem erfindungsgemäßen Aminoharz oder Amidharz sind somit vorhanden:
- Amingruppen oder Amidgruppen, an die Reste gebunden sind, die sich von der Umsetzung mit dem Monoaldehyd aus Schritt (i) ableiten, also die reaktive Schutzgruppe,
- sowie Amingruppen oder Amidgruppen, an die Reste gebunden sind, die sich von der Umsetzung mit dem Dialdehyd in Schritt (ii) ableiten und in einer bevorzugten Ausführungsform freie Aldehydgruppen aufweisen können.

In dem Aminoharz oder Amidharz kann das molare Verhältnis von reaktiver Schutzgruppe zu freier Aldehydgruppe, sofern vorhanden, über einen breiten Bereich variieren.

Der Feststoffgehalt des Aminoharzes oder Amidharzes kann über einen breiten Bereich variiert werden. Der Feststoffgehalt beträgt mindestens 40 Gew%. Bevorzugt liegt die Konzentration bzw. der Feststoffgehalt des Harzes im Bereich von 40 bis 80 Gew% oder 55 bis 70 Gew%. Das erfindungsgemäße Aminoharz oder Amidharz zeigt auch noch bei hohem Feststoffgehalt eine gute Lagerstabilität.

Gemäß eines weiteren Aspekts betrifft die vorliegende Erfindung einen Duroplasten, erhältlich aus dem oben beschriebenen Aminoharz oder Amidharz.

Der Duroplast wird erhalten, indem das Aminoharz oder Amidharz entsprechend ausgehärtet wird, d.h. einer Vernetzung unterzogen wird.

Die Erfindung wird durch die nachfolgenden Beispiele eingehender beschrieben.

### Beispiele

### Beispiel 1:

### Harz auf der Basis von Dimethoxyglyoxylat (DME)/Glyoxal

86g (0,5mol) 60%ige wässrige Dimethoxyglyoxylatlösung (d.h. Dimethoxyethanal) werden vorgelegt. Nach Zugabe von 31,5g (0,25 mol) Melamin wird unter kräftigem Rühren auf 60°C erwärmt und 30min bei dieser Temperatur gerührt. In dieser Zeit klart die anfängliche Suspension fast vollständig auf. Dann werden 36,25g (0,25mol) 40%ige wässrige Glyoxallösung innerhalb von 15min langsam bei 55°C zugetropft. Nach weiteren 5min wird die Lösung schnell auf Zimmertemperatur abgekühlt.
Das Harz hat nach einen Feststoffgehalt von 68 Gew% (TGA).

Die Viskosität wurde in Abhängigkeit von der Lagerzeit bestimmt (Tabelle).

| Lagerzeit | Kinematische Viskosität Bestimmt nach Ubbelohde (mm²/sec) |
|---|---|
| 3 Std. | 396 |
| 1 Tag | 490 |
| 3 Tage | 613 |
| 7 Tage | 693 |

### Beispiel 2 ;

### Höherer Glyoxalanteil

Zu 86g (0,5mol) 60%iger wässriger Dimethoxyglyoxylatlösung werden 47,25g (0,375 mol) Melamin unter kräftigem Rühren zugegeben und 1h auf 60°C erwärmt (Suspension von Melamin in DME-Harz-Lösung). Dann werden 113,28g (0,625mol) einer 40%igen wässrigen Glyoxallösung innerhalb von 25min. langsam bei 55°C zugetropft. Nach weiteren 5min wird die Lösung schnell auf Zimmertemperatur abgekühlt.

Das Harz hat einen Feststoffgehalt von 66 Gew% (TGA).

### Beispiel 3

### Harz auf der Basis von Glyoxylsäure/Glyoxal

330g (2,25mol) 50%ige wässrige Glyoxylsäure wird mit 50%iger wässriger Natriumhydroxidlösung bis pH 7,5 neutralisiert (Ausfällung von Natriumglyoxylat). Nach Zugabe von 126g (1 mol) Melamin wird unter kräftigem Rühren auf 60°C erwärmt und 1,5 h bei dieser Temperatur gerührt (Suspension). Dann werden 54,38g (0,375mol) 40%ige wässrige Glyoxallösung innerhalb von 40min. langsam bei 60°C zugetropft. Nach weiteren 5min wird die Lösung schnell auf Zimmertemperatur abgekühlt.

Das Harz ist bei Raumtemperatur länger als 3 Monate stabil.

Der Feststoffgehalt beträgt 42 Gew% (TGA).

### Beispiel 4

### Reduzierung der Gyoxylsäurekonzentration

330g (2,25mol) 50%ige wässrige Glyoxylsäure werden mit ca. 234g 50%iger wässriger Natriumhydroxidlösung bis pH 7,5 neutralisiert (Ausfällung von Natriumglyoxylat). Nach Zugabe von 252g (2 mol) Melamin wird unter kräftigem Rühren auf 65°C erwärmt und 1,5 h bei dieser Temperatur gerührt (Suspension). Dann werden 109g (0,75mol) 40%ige wässrige Glyoxallösung innerhalb von 30min. langsam bei 55°C zugetropft. Nach weiteren 5min wird die Lösung schnell auf Zimmertemperatur abgekühlt.

Die Lösung ist bei 20°C über 1 Woche verwendungsfähig.

### Beispiel 5

### Einsatz von KOH zur Neutralisierung (lösliche Salze)

444g (3mol) 50%ige wässrige Glyoxylsäure werden mit ca. 400g 50%iger wässriger Kaliumhydroxidlösung bei 0°C auf pH8 eingestellt. Im Gegensatz zur Neutralisierung mit Natriumsalz gab es keinen Niederschlag. Am Umschlagpunkt wurde eine leichte Gelbverfärbung beobachtet. Nach Zugabe von 252g (2 mol) Melamin wird unter kräftigem Rühren auf 65°C erwärmt und 1,5 h bei dieser Temperatur gerührt (Suspension). Dann werden 144g (1mol) einer 40%igen wässrigen Glyoxallösung innerhalb von 25min. langsam bei 55°C zugetropft. Nach weiteren 5min wird die Lösung schnell auf Zimmertemperatur abgekühlt.

Das Produkt ist 2 Monate stabil. Bei Zusatz von 5% Ethanol kann die Stabilität bei Raumtemperatur bis zu mindestens 6 Monaten gewährleistet werden.

### Beispiel 6

### Höherer Glyoxalanteil

888g (6mol) 50%ige wässrige Glyoxylsäure werden mit ca 50%iger wässriger Kaliumhydroxidlösung bis pH 7,3 neutralisiert. Nach Zugabe von 378g (3 mol) Melamin wird unter kräftigem Rühren auf 65°C erwärmt und 1 h bei dieser Temperatur gerührt. Dann werden 435g (3mol) 40%ige wässrige Glyoxallösung innerhalb von 40min. langsam bei 55°C zugetropft. Nach weiteren 5min wird die Lösung im Wasserbad auf Zimmertemperatur abgekühlt.

Die Lösung ist bei Raumtemperatur mindestens einen Monat verwendungsfähig.

## Patentansprüche

1. Ein Verfahren zur Herstellung eines Formaldehyd-freien Aminoharzes oder Amidharzes, umfassend
(i) die Umsetzung eines Triamins oder Triamids mit einem Monoaldehyd, der mindestens 2 C-Atome aufweist, wobei
- der Monoaldehyd eine Aldehydcarbonsäure oder ein Salz der Aldehydcarbonsäure, ein Alkoxyaldehyd oder ein Gemisch davon ist und
- das molare Verhältnis des Monoaldehyds zu den Amingruppen des Triamins oder den Amidgruppen des Triamids im Bereich von 0,5/3 bis 2,2/3 liegt,
unter Ausbildung eines Zwischenprodukts, das an mindestens einer Amingruppe oder Amidgruppe eine reaktive Schutzgruppe aufweist, die sich aus dem Monoaldehyd ableitet, und
(ii) die Umsetzung des Zwischenprodukts mit einem Dialdehyd oder Trialdehyd unter Ausbildung eines vernetzbaren Aminoharzes oder Amidharzes, wobei das molare Verhältnis des in Schritt (ii) zugegenenen Dialdehyds oder Trialdehyds zu den Amingruppen des in Schritt (i) zugegenenen Triamins oder den Amidgruppen des in Schritt (i) zugegebenen Triamids im Bereich von 0,1/3 bis 2,2/3 liegt.

2. Das Verfahren gemäß Anspruch 1, wobei das vernetzbare Aminoharz oder Amidharz freie Aldehydgruppen aufweist.

3. Das Verfahren nach einem der Ansprüche 1-2, wobei das Amin oder Amid ein Aminotriazin, Iminoharnstoff, ein Iminoharnstoffderivat oder ein Gemisch dieser Verbindungen ist.

4. Das Verfahren nach einem der vorstehenden Ansprüche, wobei in Schritt (i) zumindest eine Amingruppe des Amins oder eine Amidgruppe des Amids nicht mit dem Monoaldehyd unter Ausbildung einer reaktiven Schutzgruppe umgesetzt wird und somit für die Umsetzung mit dem Dialdehyd in Schritt (ii) zur Verfügung steht.

5. Das Verfahren nach einem der vorstehenden Ansprüche, wobei der Dialdehyd Glyoxal oder ein Dialdehyd der Formel OHC-(CH₂)₁₋₃-CHO ist.

6. Ein Verfahren zur Herstellung eines Duroplasten, umfassend
- die Herstellung eines Formaldehyd-freien, vernetzbaren Aminoharzes oder Amidharzes nach einem der Ansprüche 1-5 und
- die Vernetzung des Aminoharzes oder Amidharzes.

7. Ein Formaldehyd-freies, vernetzbares Aminoharz oder Amidharz, erhältlich nach dem Verfahren gemäß einem der Ansprüche 1-5.

8. Das Amino- oder Amidharz nach Anspruch 7, einen Feststoffgehalt von mindestens 40 Gew% aufweisend.

9. Ein Duroplast, erhältlich aus dem Amino- oder Amidharz nach einem der Ansprüche 7-8 durch Vernetzung.

## Claims

1. Method for preparing a formaldehyde-free amino resin or amide resin, comprising
(i) reacting a triamine or triamide with a monoaldehyde having at least 2 C atoms, where
- the monoaldehyde is an aldehydecarboxylic acid or a salt of the aldehydecarboxylic acid, an alkoxyaldehyde or a mixture thereof and
- the molar ratio of the monoaldehyde to the amine groups of the triamine or the amide groups of the triamide is in the range from 0.5/3 to 2.2/3,
to form an intermediate that has a reactive protective group derived from the monoaldehyde on at least one amine group or amide group, and
(ii) reacting the intermediate with a dialdehyde or trialdehyde to form a crosslinkable amino resin or amide resin, where the molar ratio of the dialdehyde or trialdehyde added in step (ii) to the amine groups of the triamine added in step (i) or to the amide groups of the triamide added in step (i) is in the range from 0.1/3 to 2.2/3.

2. Method according to Claim 1, wherein the crosslinkable amino resin or amide resin has free aldehyde groups.

3. Method according to either of Claims 1 and 2, wherein the amine or amide is an aminotriazine, iminourea, an iminourea derivative or a mixture of these compounds.

4. Method according to any of the preceding claims, wherein in step (i) at least one amine group of the amine or one amide group of the amide is not reacted with the monoaldehyde to form a reactive protective group, and thus is available for the reaction with the dialdehyde in step (ii).

5. Method according to any of the preceding claims, wherein the dialdehyde is glyoxal or a dialdehyde of the formula OHC-(CH₂)₁₋₃-CHO.

6. Method for preparing a thermosetting plastic, comprising
- preparing a formaldehyde-free, crosslinkable amino resin or amide resin according to any of Claims 1-5 and
- crosslinking the amino resin or amide resin.

7. Formaldehyde-free, crosslinkable amino resin or amide resin obtainable by the method according to any of Claims 1-5.

8. Amino or amide resin according to Claim 7 having a solids content of at least 40% by weight.

9. Thermosetting plastic obtainable from the amino or amide resin according to either of Claims 7 and 8 by crosslinking.

## Revendications

1. Procédé de fabrication d'une résine amino ou d'une résine amido sans formaldéhyde, comprenant :
(i) la mise en réaction d'une triamine ou d'un triamide avec un monoaldéhyde qui comprend au moins 2 atomes C,
- le monoaldéhyde étant un acide aldéhyde-carboxylique ou un sel de l'acide aldéhyde-carboxylique, un alcoxy-aldéhyde ou un mélange de ceux-ci, et
- le rapport molaire entre le monoaldéhyde et les groupes amine de la triamine ou les groupes amide du triamide se situant dans la plage allant de 0,5/3 à 2,2/3,
avec formation d'un produit intermédiaire, qui comprend un groupe protecteur réactif sur au moins un groupe amine ou un groupe amide, qui dérive du monoaldéhyde, et
(ii) la mise en réaction du produit intermédiaire avec un dialdéhyde ou un trialdéhyde avec formation d'une résine amino ou d'une résine amido réticulable, le rapport molaire entre le dialdéhyde ou le trialdéhyde ajouté à l'étape (ii) et les groupes amine de la triamine ajoutée à l'étape (i) ou les groupes amide du triamide ajouté à l'étape (i) se situant dans la plage allant de 0,1/3 à 2,2/3.

2. Procédé selon la revendication 1, dans lequel la résine amino ou la résine amido réticulable comprend des groupes aldéhyde libres.

3. Procédé selon l'une quelconque des revendications 1 à 2, dans lequel l'amine ou l'amide est l'aminotriazine, l'iminourée, un dérivé d'iminourée ou un mélange de ces composés.

4. Procédé selon l'une quelconque des revendications précédentes, dans lequel au moins un groupe amine de l'amine ou un groupe amide de l'amide n'est pas mis en réaction avec le monoaldéhyde avec formation d'un groupe protecteur réactif à l'étape (i), et est par conséquent disponible pour la réaction avec le dialdéhyde à l'étape (ii).

5. Procédé selon l'une quelconque des revendications précédentes, dans lequel le dialdéhyde est le glyoxal ou un dialdéhyde de formule OHC-(CH₂)₁₋₃-CHO.

6. Procédé de fabrication d'un duroplaste, comprenant :
- la fabrication d'une résine amino ou d'une résine amido réticulable sans formaldéhyde selon l'une quelconque des revendications 1 à 5, et
- la réticulation de la résine amino ou de la résine amido.

7. Résine amino ou résine amido réticulable, sans formaldéhyde, pouvant être obtenue par le procédé selon l'une quelconque des revendications 1 à 5.

8. Résine amino ou résine amido selon la revendication 7, présentant une teneur en solides d'au moins 40 % en poids.

9. Duroplaste, pouvant être obtenu à partir de la résine amino ou amido selon l'une quelconque des revendications 7 à 8 par réticulation.
